# EUROPEAN PATENT APPLICATION

(11) **EP 2 922 003 A2**
(43) Date of publication of application: **23.09.2015**
(21) Application number: 15163668.5
(22) Date of filing: 15.04.2015
(51) Int. Cl.: G06Q 10/06, G06Q 50/08, E01C 23/00, G06F 17/50

(54) **EXTRACTING METHOD, RECOMMENDING METHOD, INFORMATION PROCESSING APPARATUS AND METHOD FOR DECISION SUPPORT ON ROAD REPAIR METHOD**

(30) Priority: 18.03.2014 JP 2014054438
(71) Applicant: FUJITSU LIMITED, Kawasaki-shi, Kanagawa 211-8588 (JP)
(72) Inventor: Shimada, Takashi, Kanagawa, 211-8588 (JP); Tani, Hiroyuki, Kanagawa, 211-8588 (JP); Takano, Kosei, Kanagawa, 211-8588 (JP); Sasaki, Hiroshi, Kanagawa, 211-8588 (JP); Suzuki, Fumiaki, Kanagawa, 211-8588 (JP)
(74) Representative: Hoffmann Eitle

(57) **Abstract**

A method for extracting a road construction method executed by a computer as a process includes acquiring measured data of a volume of traffic on a specific road surface when extracting a candidate of a road construction method to be applied to the specific road surface out of a plurality of road construction methods including at least repair work from a foundation of a road and repair work of a surface layer of a road, and extracting the candidate of a road construction method to be applied to the specific road surface based on the acquired measured data.

## Description

### FIELD

The embodiment discussed herein is directed to an extracting method, a recommending method, an information processing apparatus, and a method for decision support on a road repair method.

### BACKGROUND

Many roads are managed by local governments such as prefectures, cities, towns, and villages. The local governments are expected to repair deteriorated roads within a limited budget and maintain the roads that are the objects of management. Consequently, in implementing the budget, the local governments may perform budget allocation in accordance with the states of deteriorated roads.

Patent Document 1: Japanese Laid-open Patent Publication No. 2005-182646

In the budget allocation, however, it has been difficult to extract a road with a deteriorated road surface out of the roads to be managed and determine an appropriate repair method for the extracted road in consideration of environmental elements such as the volume of traffic of vehicles travelling on the road.

### SUMMARY

According to an aspect of an embodiment, an extracting method for extracting a road construction method is executed by a computer as a process including: acquiring measured data of a volume of traffic on a specific road surface when extracting a candidate of a road construction method to be applied to the specific road surface out of a plurality of road construction methods including at least repair work from a foundation of a road and repair work of a surface layer of a road; and extracting the candidate of a road construction method to be applied to the specific road surface based on the acquired measured data.

### BRIEF DESCRIPTION OF DRAWINGS

FIG. 1 is a diagram for explaining one example of a system configuration;
FIG. 2 is a flowchart illustrating one example of the operation of an information processing apparatus according to an embodiment;
FIG. 3 is a diagram for explaining the determination of importance;
FIG. 4 is a diagram for explaining one example of a kilometer-post deterioration level importance evaluation table;
FIG. 5 is a diagram for explaining the calculation of a basic cost;
FIG. 6 is a table for explaining one example of a kilometer-post simulation work table;
FIG. 7 is a flowchart illustrating one example of budget simulation processing;
FIG. 8 is a table for explaining one example of an applicable-construction method table;
FIG. 9 is a diagram for explaining one example of a work-intended section simulation table;
FIG. 10 is a table for explaining one example of a construction-cost summary table;
FIG. 11 is a diagram for explaining the determination of an adjacent kilometer post;
FIG. 12 is a diagram for explaining one example of a display screen; and
FIG. 13 is a block diagram illustrating one example of the hardware configuration of the information processing apparatus.

### DESCRIPTION OF EMBODIMENTS

With reference to the accompanying drawings, the following describes an extracting method, a recommending method, an information processing apparatus, and a method for decision support on a road repair method according to an embodiment. In the embodiment, the constituents having the same function will be given the same reference symbols or numerals, and their redundant explanations will be omitted. The extracting method, the recommending method, the information processing apparatus, and the method for decision support on a road repair method described in the following embodiment illustrate only examples, and are not intended to limit the embodiment. The following embodiment may be combined as appropriate within the scope of no contradiction.

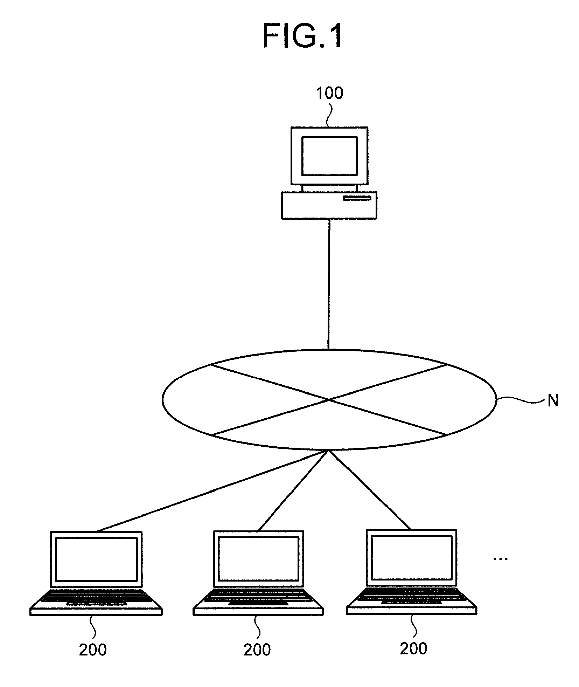

FIG. 1 is a diagram for explaining one example of a system configuration. As illustrated in FIG. 1, an information processing apparatus 100 in the embodiment is a server and the like that is coupled to terminal devices 200 to be able to communicate with via a network N such as a local area network (LAN) and the Internet. The terminal device 200 is a personal computer (PC) and the like. The information processing apparatus 100 and the terminal device 200 (the detail of their hardware configuration will be described later) perform a variety of processing as respective central processing units (CPUs) execute a computer program. Specifically, the information processing apparatus 100 performs, as its CPU executes a computer program, various processing concerning budget allocation and others. Each of the terminal devices 200 performs, as its CPU executes a computer program, the communication with the information processing apparatus 100, the processing of a graphical user interface (GUI) to make a request for various processing to the information processing apparatus 100 and to display its result, and others.

For example, a user who is a staff member and the like of a local government makes a request for various processing concerning budget allocation and others to the information processing apparatus 100 from the terminal device 200. The information processing apparatus 100 performs, based on the request for the processing received from the terminal device 200, various processing concerning the budget allocation and others and outputs the processing result to the terminal device 200. This processing enables the user to carry out the work concerning the budget allocation and others on the terminal device 200. The information processing apparatus 100 may itself have a function to perform the GUI processing, and by receiving a request for various processing concerning the budget allocation and others from the user via an input device, may display the processing result on a monitor.

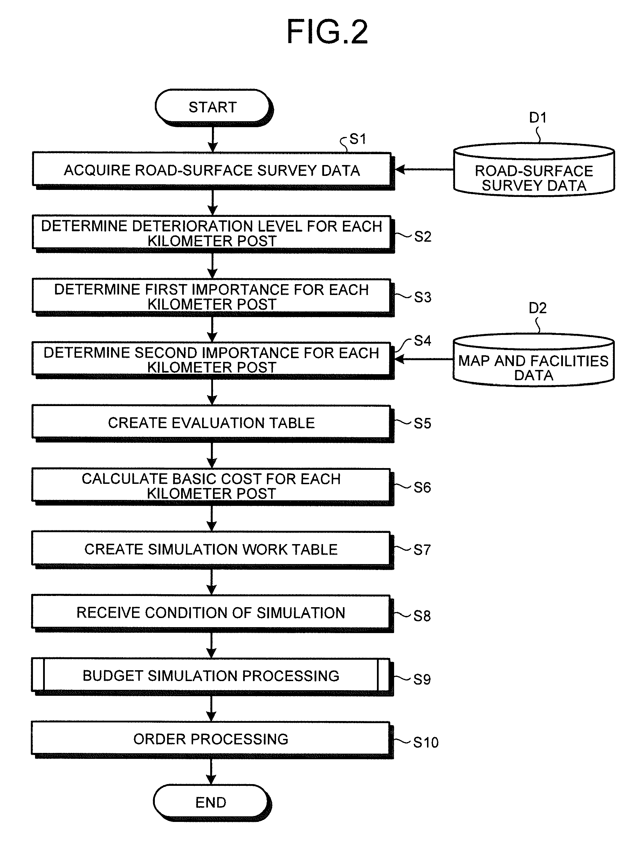

FIG. 2 is a flowchart illustrating one example of the operation of the information processing apparatus in the embodiment. The information processing apparatus 100 performs, as the CPU executes the computer program, various processing of S1 to S10 illustrated in FIG. 2.

First, when the processing is started, the information processing apparatus 100 acquires road-surface survey data D1 from storage such as a hard disk device (S1). The road-surface survey data D1 is the data representing the result of survey conducted on the actual conditions of roads managed by the local government. The road-surface survey data D1 describes, for each section (a kilometer post) of a road, at least information representing the level of deterioration of a road surface and information representing the volume of traffic of vehicles travelling on the road per unit time.

The information representing the deterioration level of a road surface in the road-surface survey data D1 may be the data in which the deterioration level was evaluated in a stepwise manner when a surveyor surveyed the road surface for each kilometer post, for example. The information representing the deterioration level of a road surface may be photography data in which the road surface was photographed with a camera for each kilometer post. As for the photography data for each kilometer post, it may be collected by running a survey vehicle mounted with a global positioning system (GPS) and with a camera for photographing road surfaces.

The information representing the volume of traffic in the road-surface survey data D1 may be the result of survey of the volume of traffic that the surveyor conducted for each kilometer post, for example. The information representing the volume of traffic may be a value obtained by counting vehicles that have passed based on the photography data of a fixed point camera that is disposed at a given location of the road. The volume of traffic may be collected by a category of vehicles such as passenger cars and trucks and by a period of time such as daytime and night-time.

After that, the information processing apparatus 100 determines, based on the information representing deterioration level included in the acquired road-surface survey data D1, the level of deterioration (for example, on a five-level scale or by point rating) of the road surface for each kilometer post (S2). Specifically, when it is the data the surveyor evaluated the deterioration level in a stepwise manner, that evaluation is determined to be the deterioration level. When it is photography data in which road surfaces were photographed, it may be determined by displaying the photography data on a monitor and the like and receiving the evaluation of the user from an input device. The information processing apparatus 100 may recognize, by known image-recognition processing, the state of a road surface in a stepwise manner from the photography data in which the road surface was photographed and may determine the result of recognition to be the deterioration level.

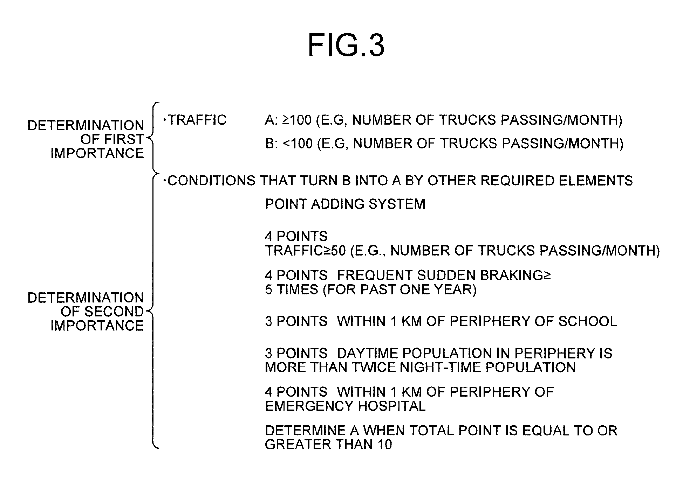

The information processing apparatus 100 then determines, based on the volume of traffic included in the road-surface survey data D1, first importance for each kilometer post (S3). FIG. 3 is a diagram for explaining the determination of importance. As illustrated in FIG. 3, in the determination of the first importance, the importance (for example, "A" being high and "B" being low) is determined to be higher as the traffic (the volume of traffic) at the corresponding kilometer post is heavier.

As one example, by focusing on the number of trucks passing per month out of the volume of traffic, when its value is equal to or higher than 100, it is determined to be "A" representing high importance. When it is below 100, it is determined to be "B" representing lower importance than that of "A."

The information processing apparatus 100 then determines, based on the volume of traffic included in the road-surface survey data D1 and on map and facilities data D2 that is read out from the storage such as a hard disk device, second importance for each kilometer post (S4). The map and facilities data D2 is the data that describes information concerning environment such as a map of a region the local government manages, the locations of roads, and facilities on the map.

Specifically, in the map and facilities data D2, for each kilometer post, the location and the range of each road the local government manages are described by latitude, longitude, address, and others. The map and facilities data D2 further describes the locations (latitude, longitude, address, and others) of facilities on the map, and the information that represents the category of facilities such as schools, hospitals, or public offices. The information concerning environment on the map may be any data as long as it represents the environment that has been surveyed concerning the locations (latitude, longitude, address, and others) on the map. As one example, it may be demographic statistics (such as daytime population and night-time population), traffic accidents and their factors (such as sudden braking and speeding), and zonings (such as residential areas and commercial areas) designated by a city planning law.

As illustrated in FIG. 3, in the determination of the second importance, the importance (for example, "A" being high and "B" being low) is determined based on environmental elements such as the traffic (volume of traffic) and facilities at the corresponding kilometer post in a point adding system. For example, when the traffic is heavy (the number of trucks passing per month is 50 or larger), four points are added. Furthermore, when the accidents by sudden braking occur frequently (five times or more for the past one year), four points are added. When the facilities of schools, hospitals, or public offices are near (within one kilometer of the periphery of a school or the periphery of an emergency hospital), three points are added. When the daytime population in the periphery is more than twice the night-time population, three points are added. Then, "A" is determined when the total of added points is equal to or greater than 10 points, or else "B" is determined.

The information processing apparatus 100 then creates a kilometer-post deterioration level importance evaluation table based on the deterioration level of a road surface determined at S2, the first importance determined at S3, and the second importance determined at S4 (S5). The created kilometer-post deterioration level importance evaluation table is stored in a memory and the like.

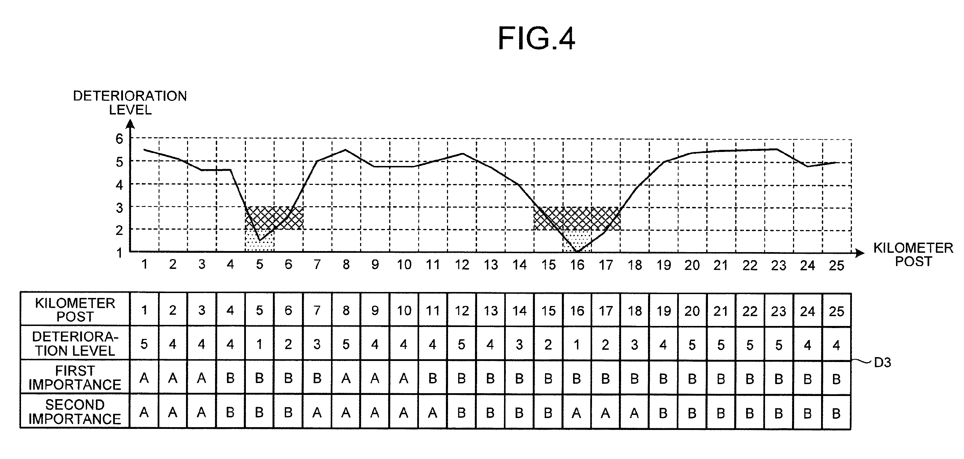

FIG. 4 is a diagram for explaining one example of a kilometer-post deterioration level importance evaluation table D3 (hereinafter, referred to as the evaluation table D3). As illustrated in FIG. 4, the evaluation table D3 describes, for each of kilometer posts "1" to "25," the deterioration level on the five-level scale determined at S2, and the first and second importance of "A"/"B" on a two-level scale determined at S3 and S4. The deterioration level is defined such that "1" is high in deterioration level and is representing a state of the deterioration of the road surface being progressed. Conversely, it is defined such that "5" is low in deterioration level and is representing a state of the road surface having no deterioration.

The information processing apparatus 100 then calculates, for each kilometer post, a basic cost when repair work is carried out (S6). The basic cost represents a fundamental cost that is estimated for a budget when the repair work is carried out. Specifically, it is an average cost when the repair work is carried out, and the cost that needs to be estimated differs depending on the deterioration level of the road surface and the importance. Consequently, at S6, the basic cost is calculated based on the deterioration level and importance for each kilometer post in the evaluation table D3. The calculated basic cost is described in the item of basic cost in the evaluation table D3.

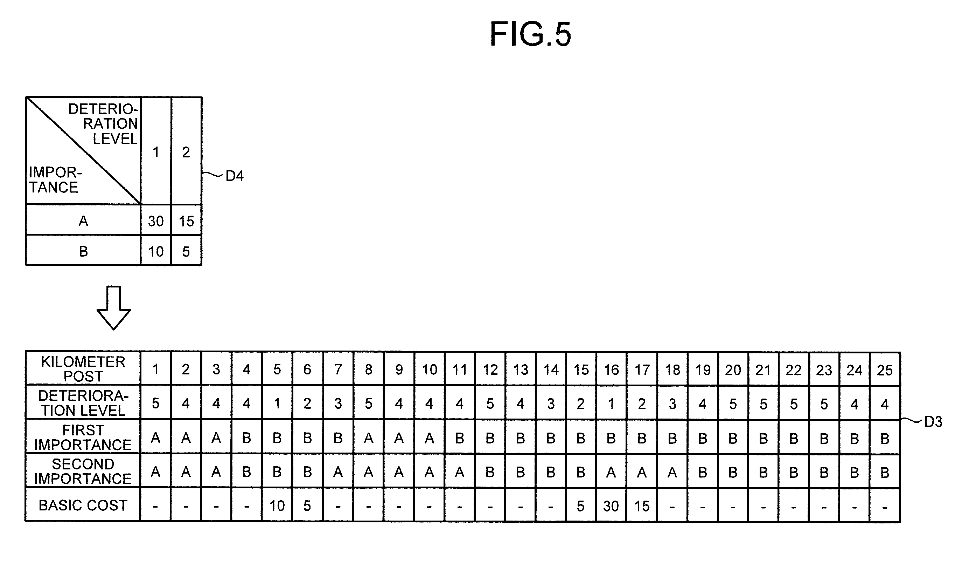

FIG. 5 is a diagram for explaining the calculation of a basic cost. As illustrated in FIG. 5, by referring to a repair cost table D4 in which the costs of repair work by deterioration level and importance are described, the basic cost is calculated for each kilometer post in the evaluation table D3. When the first importance and the second importance are different, the cost that is estimated higher is taken as the basic cost. For example, at the kilometer posts "16" and "17," the first importance is "B" and the second importance is "A" and thus the importance is different from each other. Under these different levels of importance, costs are calculated by the respective levels of importance and the cost estimated higher ("30" of the deterioration level "1" and the importance "A") is taken as the basic cost. Consequently, even when the higher importance is employed as a condition, the estimated budget is prevented from being exceeded.

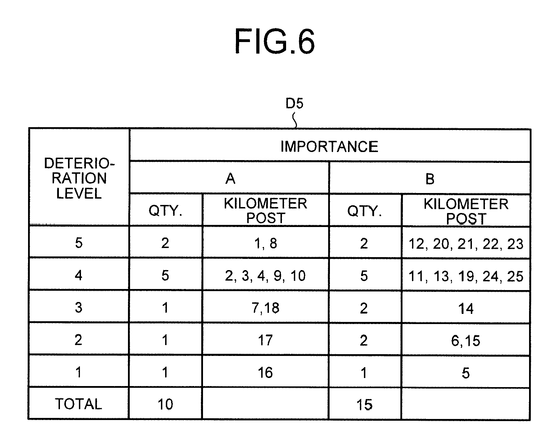

The information processing apparatus 100 then creates a kilometer-post simulation work table based on the evaluation table D3 (S7). FIG. 6 is a table for explaining one example of a kilometer-post simulation work table D5. As illustrated in FIG. 6, the kilometer-post simulation work table D5 describes the number of kilometer posts for each deterioration level, the kilometer posts corresponding thereto, the kilometer posts corresponding to the importance "A" and "B," and the number of kilometer posts thereof, for example. By having created the kilometer-post simulation work table D5 based on the evaluation table D3, the information processing apparatus 100 can shorten the time of search that uses a narrowing condition (such as deterioration level and importance), by referring to the kilometer-post simulation work table D5 at the time of budget simulation processing (S9), which will be described later.

The information processing apparatus 100 then receives an initial condition for performing a simulation (S8). Initial conditions of simulation include a total budget, and the deterioration level at which repair work is to be carried out. As one of the initial conditions, whether the importance (the first importance and the second importance) is considered may be included. Furthermore, the initial conditions may include whether a deteriorating road surface of a kilometer post that is adjacent to a kilometer post to be the object of work, is determined to be the object of repair work.

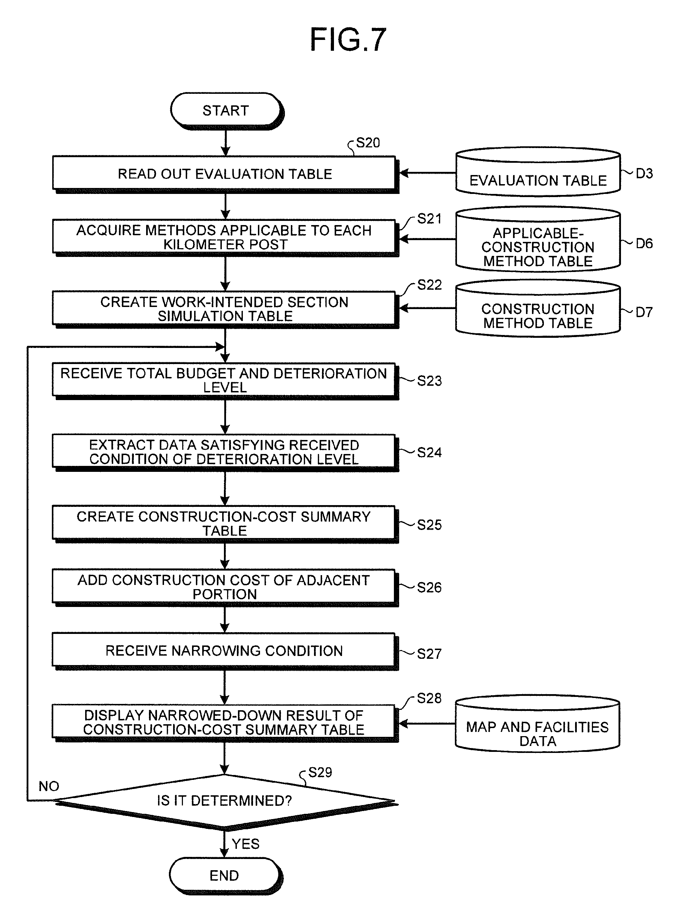

The information processing apparatus 100 then starts budget simulation processing with the initial condition received at S8 (S9). FIG. 7 is a flowchart illustrating one example of the budget simulation processing.

As illustrated in FIG. 7, when the budget simulation processing is started, the information processing apparatus 100 reads out the evaluation table D3 that has been created in the previous processing (S5 and S6) from the memory (S20). The information processing apparatus 100 then refers to an applicable-construction method table D6 and acquires applicable construction methods for the respective kilometer posts in the evaluation table D3 (S21). At this S21, the applicable construction methods acquired for the respective kilometer posts in the evaluation table D3 are stored in the memory and the like, as a work-intended section simulation table D8 (the detail of which will be described later).

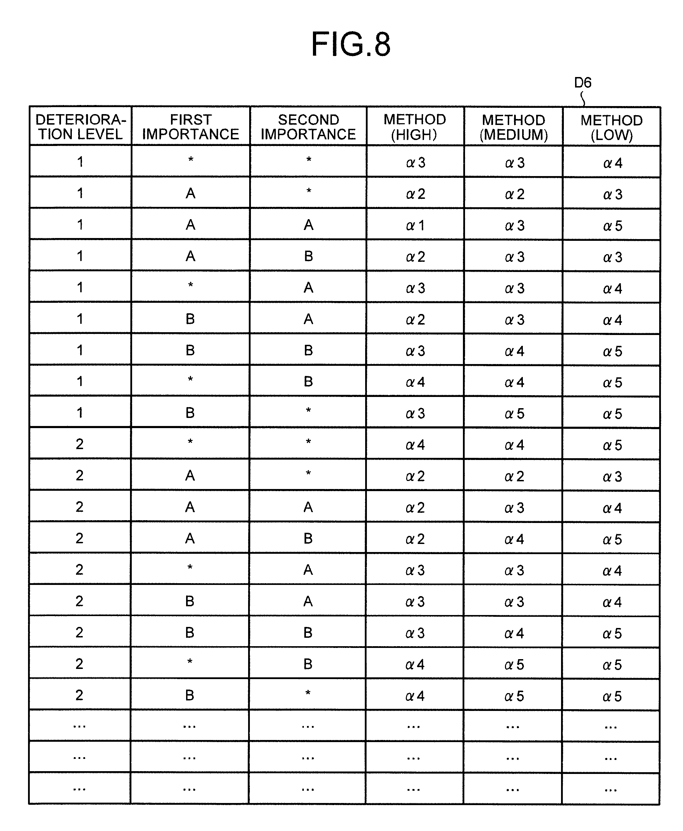

FIG. 8 is a table for explaining one example of the applicable-construction method table D6. As illustrated in FIG. 8, the applicable-construction method table D6 is the table data representing methods applicable to combinations of the deterioration level, the first importance, and the second importance.

In regard to the deterioration level, there is a combination of five levels "1" to "5." As for the first importance and the second importance, there is a combination of "A," "B," and "*" that represents an arbitrary value.

The methods applicable to the above-described combinations include deep digging work to repair from a foundation of a road, and shallow digging work to repair a surface layer of a road. More specifically, in a pavement body of a road, in the order of deeper digging, there are work to repair a surface layer, a base layer, and a roadbed, work to repair a surface layer and a base layer, and work to repair a surface layer. As one example, there are five types of methods "α1" to "α5" that correspond to the above-described work, in the order of deeper digging. It is assumed that three methods are extracted, in the order of higher cost (in the order of deeper digging), as the methods applicable to each of the above-described combinations. When the method applicable is one or two, for example, such a combination as "α2," "α2," and "α3" may be extracted in the case of two. When there is no applicable method (for example, the deterioration level "5"), null data may be set.

As is apparent from the methods "α1" to "α5" applicable to the combinations of the deterioration level, the first importance, and the second importance in the applicable-construction method table D6, a deeper digging method (method closer to "α1") is extracted as the deterioration level advances. Furthermore, a deeper digging method (method closer to "α1") is extracted as the first importance and the second importance increase.

Thus, when the volume of traffic is heavier than a given value and the importance is determined to be high, a deeper digging method is to be extracted. When the importance is determined to be high because there are facilities representing the category of schools, hospitals, or public offices, a deeper digging method is to be extracted.

When the importance is high even though a lower deterioration level is indicated because the deterioration level has not been advanced, a deeper digging method may be extracted. For example, in the combination of the first importance "B" and the second importance "B" at the deterioration level "1," the methods of "α3," "α4," and "α5" are extracted. Meanwhile, in the combination of the first importance "A" and the second importance "A" at the deterioration level "2," deeper digging methods of "α2," "α3," and "α4" are extracted.

At S21, based on a combination of the deterioration level, the first importance, and the second importance in the evaluation table D3, the methods applicable to an appropriate kilometer post are acquired from the applicable-construction method table D6. For example, on the kilometer post "5" in the evaluation table D3 illustrated in FIG. 5, the deterioration level is "1," the first importance is "B," and the second importance is "B." Thus, as for the combination of the deterioration level, the first importance, and the second importance, the combination of "1," "*," and "*," the combination of "1," "B," and "*," the combination of "1," "B," and "B," and the combination of "1," "*," and "B" are assumed. By referring to the applicable-construction method table D6 for all of those assumed combinations, three methods are acquired in the order of higher cost (in the order of deeper digging). Here, all of the methods for the assumed combinations are acquired in advance to allow for a prompt response when a narrowing condition is changed, for example, the first and the second importance are applied or not applied.

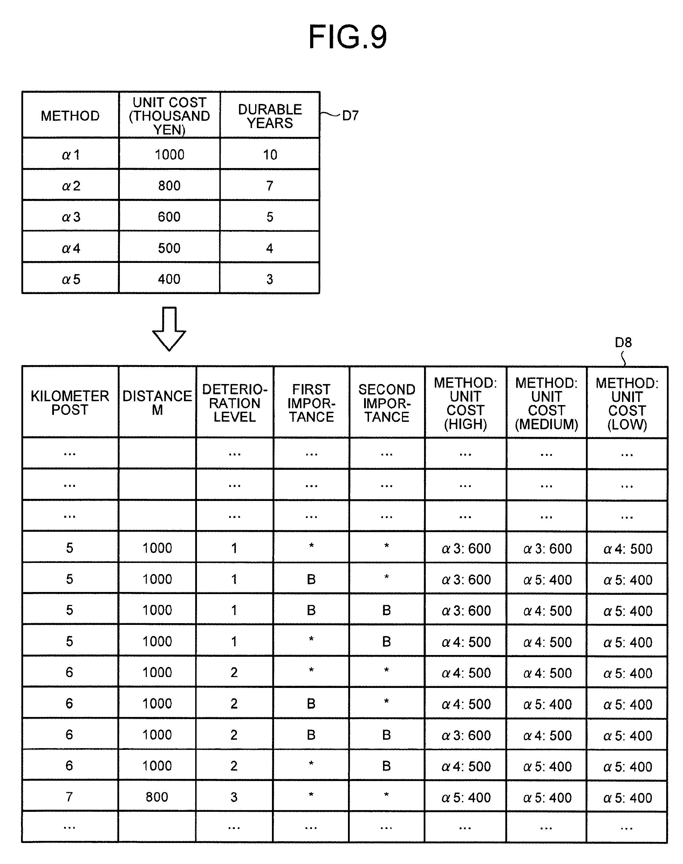

The information processing apparatus 100 then acquires unit costs of the methods "α1" to "α5" from a construction method table D7 and creates a work-intended section simulation table D8 (S22). FIG. 9 is a diagram for explaining one example of the work-intended section simulation table D8. As illustrated in FIG. 9, the construction method table D7 is the table data that describes information concerning the construction methods "α1" to "α5" such as the unit cost and durable years for each of the methods. At S22, based on the methods acquired at S21, the information on the unit costs of the methods is added by referring to the construction method table D7 and the work-intended section simulation table D8 is created.

The information processing apparatus 100 then receives a total budget, and the deterioration level intended for work, from the user via a GUI and the like (S23). When the total budget and the deterioration level have been received as initial conditions, this processing may be skipped. When changing the conditions, a new total budget and a deterioration level are received from the user.

The information processing apparatus 100 then extracts data that satisfies the received condition of deterioration level from the work-intended section simulation table D8 (S24), and creates a construction-cost summary table D9 based on the extracted data (S25).

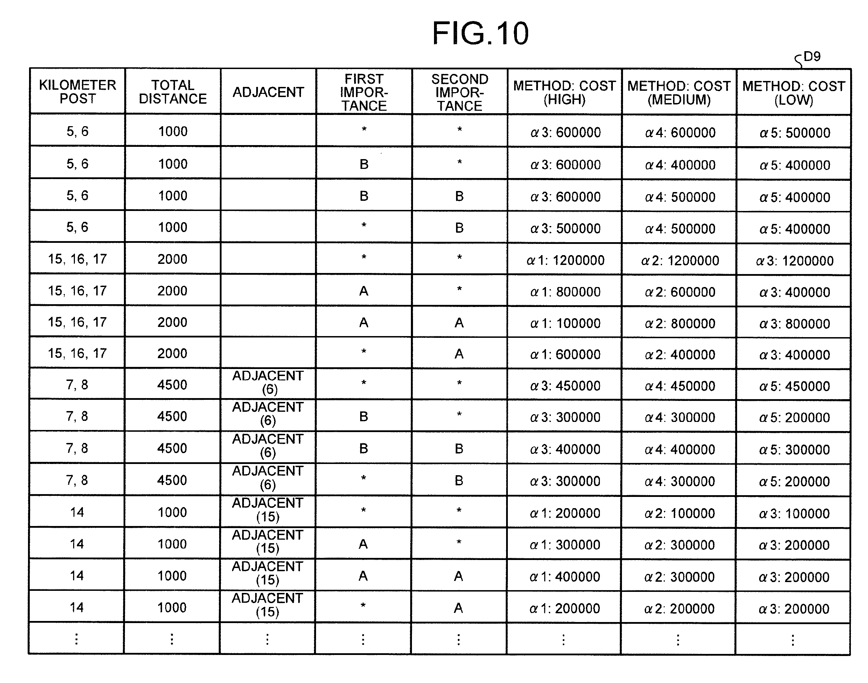

FIG. 10 is a table for explaining one example of the construction-cost summary table D9. As illustrated in FIG. 10, the data of a kilometer post that satisfies the received condition of deterioration level is extracted from the work-intended section simulation table D8, and is added to the construction-cost summary table D9. At this time, by referring to "total distance" in the work-intended section simulation table D8 and to "unit cost" of methods, the cost at the time of actually repairing is estimated and is added to the construction-cost summary table D9, for each method. In the example illustrated in FIG. 10, as the data that satisfies the received condition of deterioration level, the data on the sections of kilometer posts of "5 and 6" and on the sections of kilometer posts of "15, 16, and 17" is added. Because the data on the adjacent kilometer posts (sections of "7 and 8" and section of "14") is added at S26 as adjacent portions, it is not added at the time of S25.

The information processing apparatus 100 then adds the construction cost of the kilometer post of an adjacent portion, which is adjacent to the kilometer post that satisfies the condition of deterioration level, to the construction-cost summary table D9 (S26). As for the kilometer post of the adjacent portion, it is determined whether a condition looser than the received condition of deterioration level is satisfied, and the kilometer post that satisfies such a condition is added. Specifically, a kilometer post having deterioration that is approximate to a level to be the object of repair (for example, a deterioration level equal to or lower than "3"), although it is a condition looser (received deterioration level +1) than the received condition of deterioration level, is added.

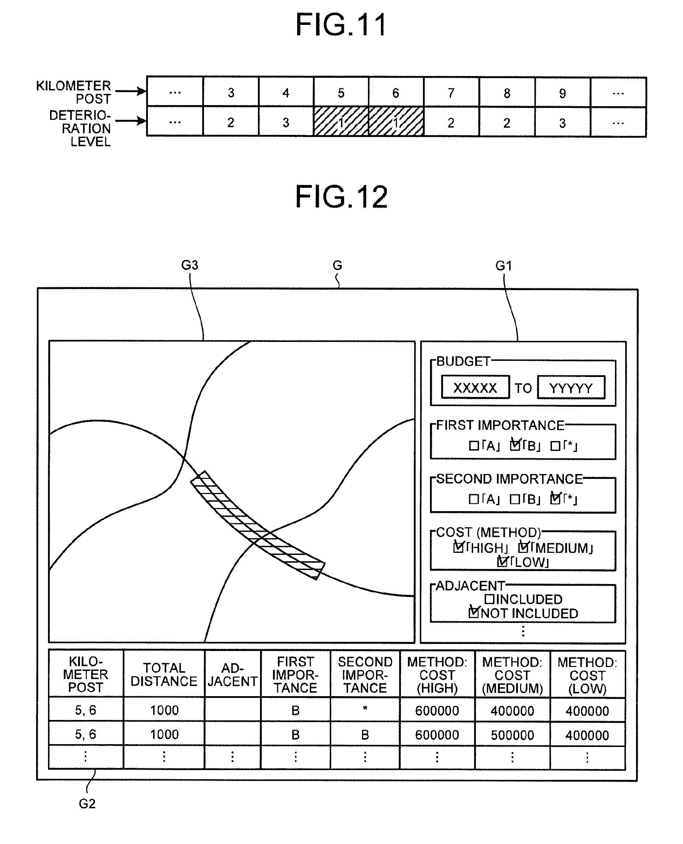

FIG. 11 is a diagram for explaining the determination of an adjacent kilometer post. In FIG. 11, the kilometer posts "5 and 6" are the kilometer posts that satisfy the received condition of deterioration level (deterioration level "1"). The first sections of the determination target as adjacent kilometer posts are the kilometer posts "4 and 7."

In regard to the section of the kilometer post "4," because the deterioration level is "3" and is the deterioration level +2, the condition for a kilometer post of an adjacent portion is not satisfied. Thus, as for the section of the kilometer post "4," the construction cost for an adjacent portion is not added to the construction-cost summary table D9.

Next, as for the section of the kilometer post "7," because the deterioration level is "2" and is the deterioration level +1, the condition for the kilometer post of an adjacent portion is satisfied. Thus, regarding the section of the kilometer post "7," the construction cost for the adjacent portion is added to the construction-cost summary table D9. Furthermore, because the kilometer post "7" is made to be the object of work, the kilometer post "8" that is adjacent to the kilometer post "7" becomes the target of determination. As for the section of the kilometer post "8," because the deterioration level is "2" and is the deterioration level +1, the condition as the kilometer post of an adjacent portion is satisfied. Consequently, regarding the section of the kilometer post "8" also, the construction cost as the adjacent portion is added to the construction-cost summary table D9.

As for the section of the kilometer post "9" that is adjacent to the kilometer post "8," because the deterioration level is "3" and is the deterioration level +2, the condition for the kilometer post of an adjacent portion is not satisfied. Thus, regarding the section of the kilometer post "9," the construction cost for an adjacent portion is not added to the construction-cost summary table D9. Consequently, as the adjacent portions of the kilometer posts "5 and 6," the construction cost of the kilometer posts "7 and 8" is added to the construction-cost summary table D9. Specifically, as illustrated in FIG. 10, regarding the kilometer posts "7 and 8" of the adjacent portions, information on the kilometer post of an adjacent source is added, other than the costs of respective methods, together with an adjacent flag in the item of "adjacent."

The information processing apparatus 100 then receives a narrowing condition from the user via the GUI and the like (S27). The narrowing condition received at S27 is a condition other than the total budget and deterioration level, and may be whether the importance (the first importance, the second importance) is to be considered and whether a kilometer post of an adjacent portion is to be included, for example. When the narrowing condition has been received as an initial condition, this processing may be skipped. When changing the narrowing condition, a new narrowing condition is received from the user.

The information processing apparatus 100 then narrows down the construction-cost summary table D9 based on the narrowing condition received at S27, and displays the narrowed-down result on a display screen (S28).

FIG. 12 is a diagram for explaining one example of a display screen G. As illustrated in FIG. 12, the display screen G has an input area G1, a result display area G2, and a map display area G3. The input area G1 is an area to perform various condition settings such as a narrowing condition by checking on boxes or entering numerical values. The result display area G2 is an area to display the result of narrowing down the construction-cost summary table D9 with the condition defined in the input area G1. The map display area G3 is an area to display on a map a kilometer post that has been narrowed down from the construction-cost summary table D9 with the condition defined in the input area G1.

At S28, the construction-cost summary table D9 is narrowed down based on the narrowing conditions of the total budget, the first importance, and the second importance ("A," "B," "*"), and on the presence of adjacent portions and others. As for the adjacent portions, the costs of the adjacent portions are added to the costs of respective adjacent sources and the resulted cost is compared with the total budget, so that the adjacent sources satisfying the total budget are narrowed down on. In the example illustrated in FIG. 12, "B" of the volume of traffic that is the first importance and "*" of the environment (neighboring facilities and the like) that is the second importance are defined as the narrowing conditions. The adjacent portions are defined not to be included.

Consequently, in the construction-cost summary table D9 illustrated in FIG. 10, the data of the kilometer posts "5 and 6" that satisfies "B" of the first importance and "B" or "*" of the second importance is narrowed down on. The narrowed-down data is then displayed on the result display area G2. Furthermore, the locations corresponding to the kilometer posts "5 and 6" are read from the map and facilities data D2 and a map for which display form of the locations corresponding to the kilometer posts "5 and 6" has been changed (for example, shaded display) is displayed on the map display area G3. This enables the user to easily recognize the intended section, method, cost, and others of the repair work that matches the narrowing conditions.

The information processing apparatus 100 then receives from the user via the GUI and the like whether the budget allocation is determined with the intended section, method, cost, and others of the repair work that matches the narrowing conditions (S29). Specifically, by selecting the desired items of kilometer post and method from the list displayed on the result display area G2, the user determines the budget allocation. When the budget allocation is not determined from the list displayed on the result display area G2, the user cancels the narrowing conditions by operating a cancel button and the like.

When the budget allocation is determined (Yes at S29), the information processing apparatus 100 ends the budget simulation processing. When defining a new condition without determining the budget allocation (No at S29), the information processing apparatus 100 returns the processing to S23. Consequently, the user can define the new condition. For example, the first and the second importance ("A," "B," "*"), including or not including the adjacent portions, and others are adjusted so as to be stricter conditions. Performing the budget simulation by making an adjustment this way enables the user to find a combination that meets the total budget.

Referring back to FIG. 2, the information processing apparatus 100 performs, based on the budget allocation determined in the budget simulation processing at S9, order processing to place an order for the work (S10). Specifically, the processing such as preparation of an application and the like, registration to a database concerning the budget, and others is executed based on the kilometer post, method, cost, and others of the work that has been determined to be carried out.

On the various processing functions performed by the information processing apparatus 100, the whole or any part thereof may be configured to be executed on a CPU (or a microcomputer such as a micro processing unit (MPU) and a micro controller unit (MCU)). Naturally, the whole or any part of the various processing functions may be configured to be executed on a computer program, which is analyzed and executed by the CPU (or a microcomputer such as an MPU and an MCU), or on hardware by wired logic.

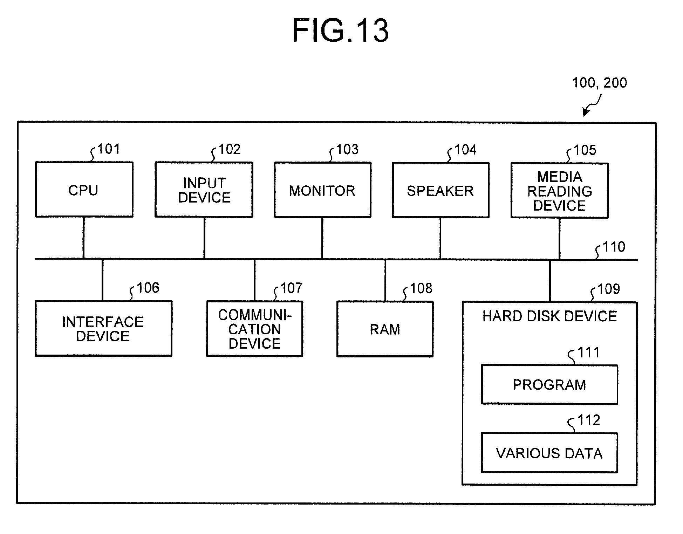

The various processing described in the above-described embodiment can be implemented by executing a computer program, which has been prepared in advance, on a computer. Thus, the following describes one example of the computer (hardware) that executes a computer program having the same functions as those in the above-described embodiment. FIG. 13 is a block diagram illustrating the hardware configuration of the information processing apparatus in the embodiment.

As illustrated in FIG. 13, the information processing apparatus 100 includes a CPU 101 that executes various arithmetic processes, an input device 102 that receives data input, a monitor 103, and a speaker 104. The information processing apparatus 100 further includes a media reading device 105 that reads out a computer program and the like from a storage medium, an interface device 106 to be coupled to various devices, and a communication device 107 to perform communication connection with external devices in a wired or wireless manner. The information processing apparatus 100 further includes a random access memory (RAM) 108 that temporarily stores therein a variety of information, and a hard disk device 109. Furthermore, the various devices (101 to 109) in the information processing apparatus 100 are coupled to a bus 110.

The hard disk device 109 stores therein a computer program 111 to execute various processing described in the foregoing embodiment. The hard disk device 109 further stores therein a variety of data 112 (such as the road-surface survey data D1 and the map and facilities data D2) to implement the computer program 111. The input device 102 receives input of operating information from an operator of the information processing apparatus 100, for example. The monitor 103 displays various screens that the operator manipulates, for example. The interface device 106 is coupled to a printing device, for example. The communication device 107 is coupled to a communication network such as a local area network (LAN) and exchanges a variety of information with external devices via the communication network.

The CPU 101 reads out the computer program 111 stored in the hard disk device 109, and loads and executes it on the RAM 108 to perform various processing. The computer program 111 does not need to be stored in the hard disk device 109. For example, it may be configured such that the information processing apparatus 100 reads out and executes the computer program 111 stored in a storage medium that the information processing apparatus 100 can read. The storage medium that the information processing apparatus 100 can read corresponds to a portable recording medium such as a compact disc read only memory (CD-ROM), a digital versatile disc (DVD), and a universal serial bus (USB) memory; a semiconductor memory such as a flash memory; and a hard disk drive, for example. It may further be configured such that, by storing the computer program on a device coupled to a public line, the Internet, a LAN, and the like, the information processing apparatus 100 reads out the computer program from them and executes it.

In accordance with at least one form of the extracting method, the recommending method, the information processing apparatus, and the method for decision support on a road repair method, it has an effect in that the method for repairing road surface can be determined easily.

## Claims

1. An extracting method for extracting a road construction method, the extracting method being executed by a computer as a process comprising:
acquiring measured data of a volume of traffic on a specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired measured data.

2. The extracting method according to claim 1, wherein a repair work method for a deeper layer of a road is to be extracted when the acquired measured data represents a heavier volume of traffic.

3. An extracting method for extracting a road construction method executed by a computer as a process comprising:
acquiring measured data of a volume of traffic on a specific road surface and measured data of a deterioration level of the specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired measured data of the volume of traffic and the measured data of the deterioration level of the road surface.

4. The extracting method according to claim 3, wherein the repair work from a foundation is to be extracted when the acquired measured data of the volume of traffic represents a volume of traffic that exceeds a given volume of traffic even though the acquired measured data of the deterioration level of the road surface represents a deterioration level lower than a given deterioration level.

5. An extracting method for extracting a road construction method, the extracting method being executed by a computer as a process comprising:
acquiring facilities information on a periphery of a specific road surface from map information when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface according to a category of facilities that the acquired facilities information represents.

6. The extracting method according to claim 5, wherein the repair work from a foundation of a road is extracted in preference to the repair work of a surface layer when the acquired facilities information represents a category of schools, hospitals, or public offices.

7. An extracting method for extracting a road construction method, the extracting method being executed by a computer as a process comprising:
acquiring facilities data obtainable by acquiring facilities information on a periphery of a specific road surface from map information and measured data of a deterioration level of the specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired facilities data and the measured data of the deterioration level of the road surface.

8. The extracting method according to claim 7, wherein the repair work from a foundation is to be extracted when the acquired facilities data represents presence of facilities of a given category even though the acquired measured data of the deterioration level of the road surface represents a deterioration level lower than a given deterioration level.

9. A recommending method for recommending a repair work method comprising:
outputting as a recommended work method a road repair work method of an appropriate level according to a combination that satisfies both a first condition and a second condition on each portion of a road included in a scope of extracting a repair point, wherein
the first condition is that data representing a deterioration level of a road surface exceeds a given deterioration level, and
the second condition is that data representing a volume of traffic exceeds a given volume of traffic or peripheral facilities information corresponds to facilities of a given category.

10. The recommending method according to claim 9, further comprising:
receiving budget information concerning road repair, wherein
the output recommended work method is selected such that a total cost of a recommended repair work method is in a range not exceeding a budget represented by the received budget information by referring to stored data of cost information defined for each level of road repair work.

11. The recommending method according to claim 10, further comprising outputting a candidate of a road portion to be an object of repair out of road portions present in a given area and the total cost of repair of the road portion to be an object of repair in accordance with a plurality of combinations satisfying both the first condition and the second condition together with the received budget information.

12. The recommending method according to claim 11, further comprising performing a process of determining an adjacent road portion to be an object of repair in preference to other candidate of a road portion to be an object of repair when the road portion adjacent to a road portion that is determined to be an object of repair is a candidate to be an object of repair.

13. An information processing apparatus comprising:
a processor, wherein
the processor executes a process of
acquiring measured data of a volume of traffic on a specific road surface when extracting a candidate of a road construction method to be applied to the specific road surface out of a plurality of road construction methods including at least repair work from a foundation of a road and repair work of a surface layer of a road, and
extracting the candidate of a road construction method to be applied to the specific road surface based on the acquired measured data.

14. An information processing apparatus comprising:
a processor, wherein
the processor executes a process of
acquiring measured data of a volume of traffic on a specific road surface and measured data of a deterioration level of the specific road surface when extracting a candidate of a road construction method to be applied to the specific road surface out of a plurality of road construction methods including at least repair work from a foundation of a road and repair work of a surface layer of a road, and
extracting the candidate of a road construction method to be applied to the specific road surface based on the acquired measured data of the volume of traffic and the measured data of the deterioration level of the road surface.

15. An information processing apparatus comprising:
a processor, wherein
the processor executes a process of
acquiring facilities information on a periphery of a specific road surface from map information when extracting a candidate of a road construction method to be applied to the specific road surface out of a plurality of road construction methods including at least repair work from a foundation of a road and repair work of a surface layer of a road, and
extracting the candidate of a road construction method to be applied to the specific road surface according to a category of facilities that the acquired facilities information represents.

16. An information processing apparatus comprising:
a processor, wherein
the processor executes a process of
acquiring facilities data obtainable by acquiring facilities information on a periphery of a specific road surface from map information and measured data of a deterioration level of the specific road surface when extracting a candidate of a road construction method to be applied to the specific road surface out of a plurality of road construction methods including at least repair work from a foundation of a road and repair work of a surface layer of a road, and
extracting the candidate of a road construction method to be applied to the specific road surface based on the acquired facilities data and the measured data of the deterioration level of the road surface.

17. An information processing apparatus comprising:
a processor, wherein
the processor outputs as a recommended work method a road repair work method of an appropriate level according to a combination that satisfies both a first condition and a second condition on each portion of a road included in a scope of extracting a repair point,
the first condition is that data representing a deterioration level of a road surface exceeds a given deterioration level, and
the second condition is that data representing a volume of traffic exceeds a given volume of traffic or peripheral facilities information corresponds to facilities of a given category.

18. A method for decision support on a road repair method, the method being executed by using a computer as a process comprising:
acquiring measured data of a volume of traffic on a specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired measured data.

19. A method for decision support on a road repair method, the method being executed by using a computer as a process comprising:
acquiring measured data of a volume of traffic on a specific road surface and measured data of a deterioration level of the specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired measured data of the volume of traffic and the measured data of the deterioration level of the road surface.

20. A method for decision support on a road repair method, the method being executed by using a computer as a process comprising:
acquiring facilities information on a periphery of a specific road surface from map information when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface according to a category of facilities that the acquired facilities information represents.

21. A method for decision support on a road repair method, the method being executed by using a computer as a process comprising:
acquiring facilities data obtainable by acquiring facilities information on a periphery of a specific road surface from map information and measured data of a deterioration level of the specific road surface when extracting a candidate of a road construction method to be applied to the specific road surface out of a plurality of road construction methods including at least repair work from a foundation of a road and repair work of a surface layer of a road; and
extracting the candidate of a road construction method to be applied to the specific road surface based on the acquired facilities data and the measured data of the deterioration level of the road surface.

22. A method for decision support on a road repair method, the method being executed by using a computer as a process comprising:
outputting as a recommended work method a road repair work method of an appropriate level according to a combination that satisfies both a first condition and a second condition on each portion of a road included in a scope of extracting a repair point, wherein
the first condition is that data representing a deterioration level of a road surface exceeds a given deterioration level, and
the second condition is that data representing a volume of traffic exceeds a given volume of traffic or peripheral facilities information corresponds to facilities of a given category.
